# FASCICULE DE BREVET EUROPEEN

(11) **EP 2 055 475 B1**
(45) Date de publication et mention de la délivrance du brevet: **16.05.2012**
(21) Numéro de dépôt: 08157786.8
(22) Date de dépôt: 06.06.2008
(51) Int. Cl.: B32B 37/22, B32B 38/18

(54) **Système de découpe de feuilles de recouvrement en continu**
Schnittsystem für Endlosabdeckfolien
System for cutting continuous covering sheets

(30) Priorité: 31.10.2007 ES 200702866
(43) Date de publication de la demande: 06.05.2009
(73) Titulaire: Barberan Latorre, Jesús Francisco, 08860 Castelldefels (Barcelona) (ES)
(72) Inventeur: Barberan Latorre, Jesús Francisco, 08860 Castelldefels (Barcelona) (ES)
(74) Mandataire: Cabinet Plasseraud

(56) Documents cités:
- EP-A- 0 314 036
- DE-A1- 3 737 946
- DE-A1- 10 328 868
- DE-A1- 19 917 828
- DE-C1- 10 123 521
- US-A- 5 289 750

## Description

### Domaine de l'invention

La présente invention concerne le revêtement de la terminaison superficielle de panneaux ou de profils par une feuille de recouvrement fournie en continu depuis une bobine d'alimentation, proposant un système de découpe de la feuille de recouvrement dans lesdites applications, avec laquelle l'installation est simplifiée, conservant le caractère opérationnel du procédé de recouvrement en continu avec des caractéristiques optimales d'efficacité.

### Etat de l'art

Dans les procédés de revêtement superficiel des panneaux, profils, ou autres éléments similaires, avec une feuille de recouvrement fournie en continu à partir d'une bobine d'alimentation, on rencontre le problème de la séparation des pièces recouvertes, lesquelles restent unies par la feuille de recouvrement, de telle sorte qu'à la fin du procédé de recouvrement il est nécessaire de réaliser la séparation des pièces recouvertes, ce qui présente un niveau de difficulté qui dépend de la résistance de la feuille et de la largeur des pièces, de telle sorte que la réalisation manuelle de ladite séparation s'avère difficile.

Pour résoudre cette difficulté et améliorer le procédé de façon automatisée, des solutions ont été développées en vue de séparer des pièces recouvertes, par exemple par un système de découpe à la fin du procédé de recouvrement, avec un disque de sciage qui coupe conjointement la feuille de recouvrement et la pièce recouverte, au début et à la fin de chaque pièce, les pièces étant ainsi terminées. Cette solution a pour inconvénient un coût élevé, étant donné qu'elle nécessite l'installation d'une machine supplémentaire pour réaliser la découpe, et un système d'extraction de la poussière produite lors des découpes est nécessaire, en plus du gaspillage de matériau occasionné.

Une autre solution avec laquelle on obtient le même résultat revient à installer une lame pour découper la feuille de recouvrement entre les pièces recouvertes, à la fin du procédé de recouvrement. Cette solution nécessite de laisser une distance de séparation entre les pièces recouvertes, pour le passage de la lame de découpe, moyennant quoi aux extrémités des pièces il résulte un excédent de la feuille de recouvrement, de telle sorte qu'une opération postérieure est nécessaire pour éliminer cet excédent, ce qui suppose également un gaspillage de matériau.

Une autre solution revient à installer à la fin du procédé de recouvrement des rouleaux destinés à obliger les pièces recouvertes à réaliser une petite déviation sur leur trajet, pour que la feuille de recouvrement se plie entre les pièces consécutives. Ce système s'avère économique, mais il est uniquement utilisable avec les feuilles de recouvrement très fragiles et avec les pièces d'application du recouvrement fines et flexibles, pour que la rupture de la feuille soit occasionnée. Avec ce système, il est toujours nécessaire de nettoyer les extrémités de la feuille, étant donné que les bords qui résultent de la découpe par rupture sont défectueux.

Il est connu par le document US5289750 un appareil de collage de pellicule sur une carte, utilisant un organe de coupe rotatif et un organe de coupe fixe en rotation et mobile en translation. Ces organes de coupe sont placés sur la largeur de la pellicule, la découpe de la pellicule étant effectuée de manière que le tronçon coupé de la pellicule corresponde à la longueur de la carte.

Il est connu par ailleurs, par le document EP 1 688 250, un dispositif de coupe pour supports plastifiés qui utilise une tête de coupe rotative équipée d'au moins une lame de coupe en association avec une surface fixe de glissement, contre laquelle le support plastifié est en appui lors de la coupe.

### Obiet de l'invention

L'invention propose un système de découpe de feuilles de papier, PVC, CPL, plaque de bois en bobine, ou matériaux similaires, appliqués dans les procédés de recouvrement en continu de pièces telles que les panneaux ou les profils, de telle sorte que les découpes de la feuille de recouvrement soient réalisées à la mesure des pièces qui doivent être recouvertes, sans affecter lesdites pièces ni les développements du recouvrement en continu.

Ce système qui fait l'objet de l'invention intègre la réalisation de la découpe à la sortie du dévidage d'alimentation en continu de la feuille de recouvrement, avant le collage de celle-ci et son contact avec les pièces à recouvrir, pour l'application des blocs de la feuille découpée sur les pièces correspondantes, dans une rencontre ultérieure.

On obtient ainsi un système qui réalise les découpes de la feuille de recouvrement avant l'application de celle-ci sur les pièces à recouvrir, de telle sorte qu'avec un contrôle de l'exécution des découpes en fonction de la longueur des pièces d'application le découpage de la feuille soit réalisé à la mesure exacte de ces pièces, moyennant quoi, à l'application de la feuille, le recouvrement soit obtenu avec une terminaison parfaite des pièces qui doivent être recouvertes, sans excédents de la feuille qu'il faudrait recouper ou régler, et avec les pièces recouvertes rendues indépendantes entre elles.

Plus précisément, le dispositif de découpe est du type à découpe rotative, en disposition transversale fixe sur le parcours de la feuille, comme défini dans la revendication 1.

De cette façon, la réalisation de la découpe permet d'alimenter la feuille sans modifier la vitesse d'alimentation du procédé de recouvrement, de telle sorte que le rythme de production n'est pas diminué, mais augmente au contraire étant donné qu'il n'est pas nécessaire de réaliser ultérieurement une quelconque opération de réglage des pièces qui sont recouvertes.

En conservant le concept d'opération sur la feuille de recouvrement avant que celle-ci soit appliquée sur les pièces à recouvrir, dans les mêmes conditions que le dispositif de découpe il est possible de prévoir un dispositif de perforation pour réaliser dans la feuille des lignes de recoupe, grâce auxquelles il est possible de réaliser facilement la rupture pour séparer les pièces recouvertes après le procédé de recouvrement.

Par conséquent, le système selon l'invention présente quelques caractéristiques certainement avantageuses, réalisées de préférence dans le cadre de l'application de destination.

### Description des figures

La figure 1 présente un schéma d'une installation de recouvrement en continu de pièces, selon le mode de réalisation traditionnel ;
la figure 2 présente un schéma d'une installation de recouvrement en continu de pièces, avec le système de découpe de la feuille de recouvrement selon l'invention ;

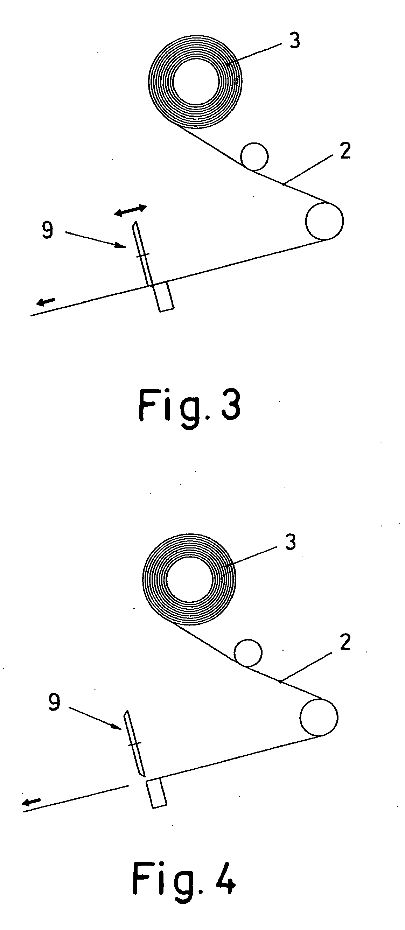

la figure 3 illustre un exemple, en dehors de l'invention, de coupe par cisaille sur un chariot mobile par rapport à l'alimentation continue de la feuille pour le recouvrement, dans la position de réalisation d'une découpe ;
la figure 4 présente le même exemple de découpe de la figure précédente, dans la position de fin de la découpe ;

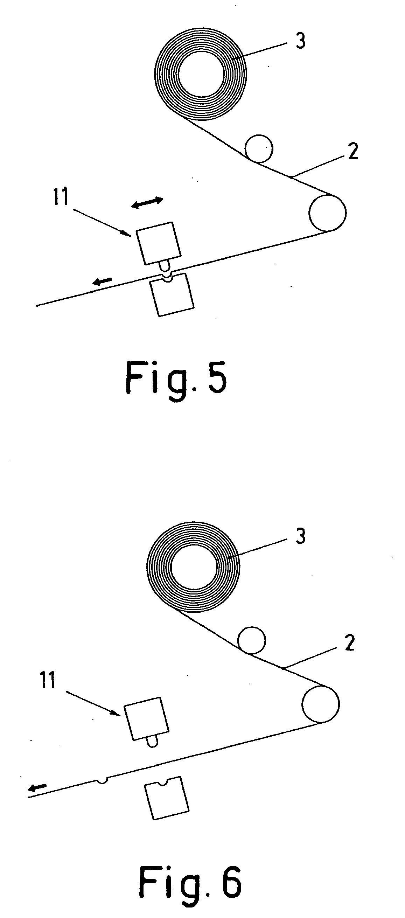

la figure 5 est un exemple, en dehors de l'invention, de perforation sur un chariot mobile par rapport à l'alimentation continue de la feuille pour le recouvrement, dans la position de réalisation d'une perforation ;
la figure 6 présente le même exemple de perforation de la figure précédente, dans la position postérieure à la réalisation de la perforation ;
la figure 7 est un exemple de découpe rotative en situation fixe par rapport à l'alimentation de la feuille de recouvrement ;
la figure 8 est un exemple de perforation rotative en situation fixe par rapport à l'alimentation de la feuille de recouvrement.

### Description détaillée de l'invention

L'objet de l'invention concerne un système de découpe de la feuille alimentée en continu pour le recouvrement de pièces telles que des panneaux ou des profils, dans les installations de cette application, avec une disposition permettant d'obtenir dans le procédé de recouvrement les pièces parfaitement terminées, sans qu'un réglage ultérieur soit nécessaire.

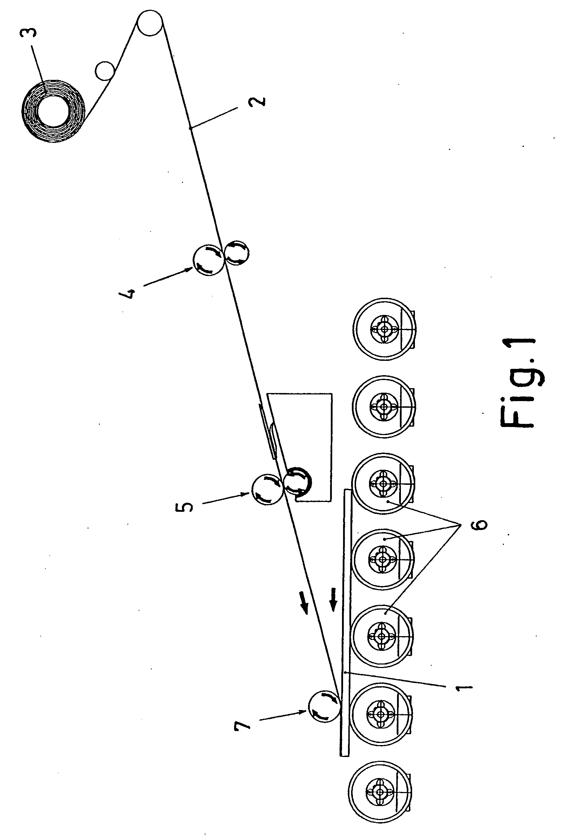

Dans les installations de recouvrement en continu de pièces (1) par l'application d'une feuille (2), la feuille de recouvrement (2) est alimentée à partir d'une bobine d'alimentation (3), passant par des rouleaux d'entraînement (4) et par un encolleur (5), après quoi la feuille (2) rencontre les pièces (1) qui doivent être recouvertes et qui sont transportées par un transporteur (6), sur lesquelles la feuille (2) est appliquée par un rouleau de pression (7), ainsi que cela est illustré sur la figure 1.

Dans la disposition traditionnelle de ces installations, la feuille (2) arrive en bande continue pour rencontrer les pièces (1) qui doivent être recouvertes, de telle sorte qu'avec l'application du recouvrement lesdites pièces (1) restent unies entre elles par la feuille de recouvrement (2), laquelle doit être coupée après le procédé de recouvrement, pour séparer les pièces (1) recouvertes, des opérations complémentaires étant nécessaires à cet effet et des gaspillages de matériau étant occasionnés.

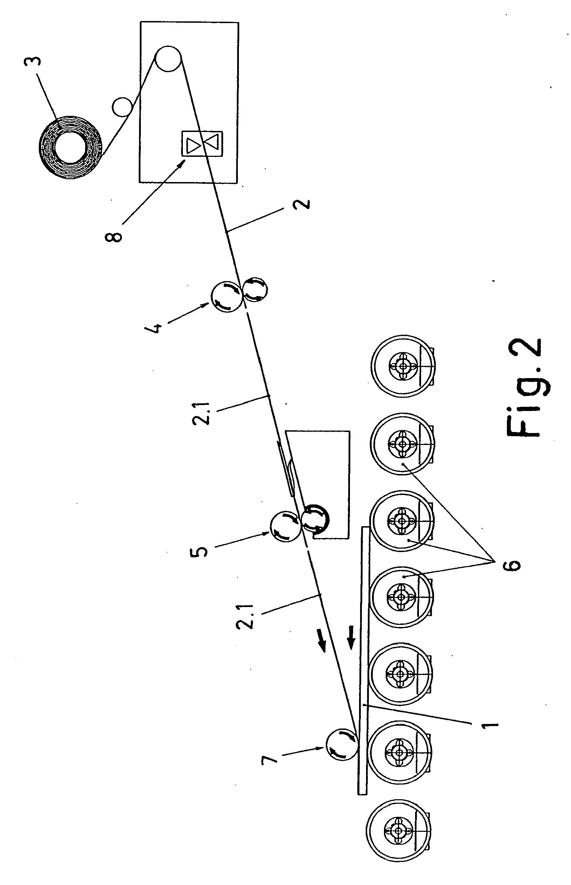

Le système selon l'invention (figure 2) résout ce problème en disposant un mécanisme de découpe (8) dans la zone de l'alimentation de la feuille (2) destinée au recouvrement, de telle sorte qu'avec ledit mécanisme la feuille (2) soit découpée en blocs (2.1) à la mesure des pièces (1) qui doivent être recouvertes, avant l'application du recouvrement, et ainsi le recouvrement est achevé en appliquant les blocs de feuille (2.1) sur les pièces (1), moyennant quoi celles-ci sont parfaitement terminées et séparées entre elles.

La réalisation des découpes sur la feuille (2) est régie par un contrôle lié à la longueur des pièces (1) qui doivent être recouvertes, de telle sorte que les blocs de feuille (2.1) soient découpés à la mesure exacte des pièces (1), le transport des blocs de feuille (2.1) jusqu'au point de rencontre avec les pièces (1) étant contrôlé par des moyens de détection, pour que le bord d'attaque de chaque bloc de feuille (2.1) coïncide avec le bord de fuite de la pièce correspondante (1) qui doit être recouverte, faisant varier la vitesse de déplacement des uns ou des autres éléments, ou des deux, mais de préférence la vitesse des morceaux de feuille (2.1), pour que la rencontre mentionnée survienne avec exactitude.

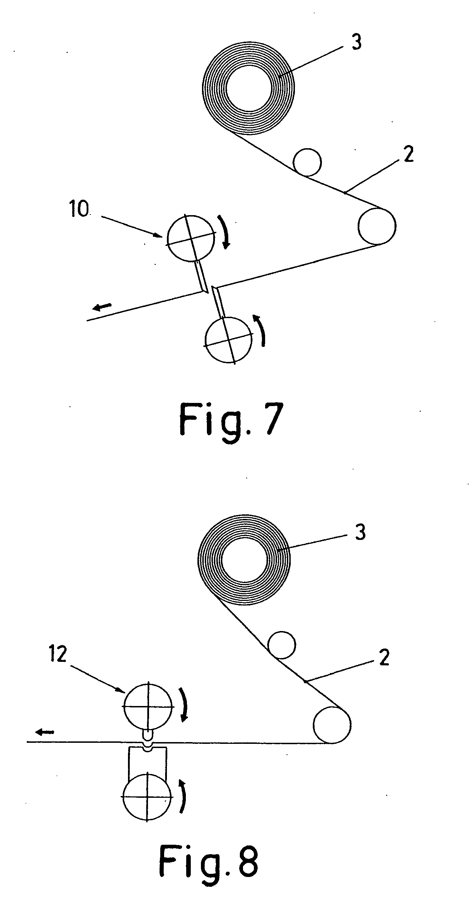

Le mécanisme de découpe (8) permet de réaliser la découpe transversale de la feuille (2) pendant le déplacement de celle-ci dans l'alimentation jusqu'au procédé d'application sur les pièces (1) qui doivent être recouvertes. Le mécanisme de découpe (8) est un dispositif (10) de type rotatif, ainsi que cela est illustré sur la figure 7, situé transversalement par rapport au pas de la feuille (2), pour réaliser les découpes par une rotation synchronisée avec l'avancement du déplacement d'alimentation de ladite feuille (2).

Dans le même concept opérationnel sur la feuille (2) dans la zone de sortie du dévidage d'alimentation de celle-ci, ce qui constitue le fondement de l'invention, le mécanisme (8) peut également être un dispositif perforateur, pour pratiquer sur la feuille (2) des lignes perforées susceptibles de permettre une rupture facile de celle-ci pour séparer les pièces (1) recouvertes, à la fin du procédé de recouvrement.

Dans ce cas, le dispositif perforateur est un dispositif (12) situé transversalement conformément à l'exemple illustré sur la figure 8.

## Revendications

1. Système de découpe de feuilles de recouvrement en continu, du type qui alimente une feuille (2) de façon continue à partir d'une bobine d'alimentation (3), pour le recouvrement de pièces (1) consécutives, et dans lequel un mécanisme (8) est agencé pour opérer sur la feuille (2) à la sortie du dévidage d'alimentation de celle-ci, pour déterminer des blocs (2.1) de ladite feuille (2) équivalant à la longueur des pièces (1) qui doivent être recouvertes, lesdits blocs (2.1) étant conduits jusqu'à un point de rencontre postérieur avec les pièces (1), pour recouvrir individuellement chacune de celles-ci, **caractérisé en ce que** le mécanisme (8) est un dispositif (10, 12) à entraînement rotatif des organes permettant la découpe et présente une disposition transversale fixe par rapport au parcours de la feuille et **en ce que** lesdits organes du dispositif (10, 12) sont entraînés en rotation selon des sens opposés.

2. Système de découpe selon la revendication 1, **caractérisé en ce qu'**entre le déplacement des blocs de feuille (2.1) jusqu'au point de rencontre avec les pièces (1) qui doivent être recouvertes et le déplacement de celles-ci une synchronisation est réalisée pour déterminer, au point de rencontre correspondant, la coïncidence exacte de chaque bloc de feuille (2.1) avec la pièce (1) respective qui doit être recouverte.

3. Système de découpe selon la revendication 1, **caractérisé en ce que** le dispositif à entraînement rotatif est un dispositif (10) de découpe rotatif, intégré transversalement par rapport au pas de la feuille (2) dans l'alimentation.

4. Système de découpe selon la revendication 1, **caractérisé en ce que** le dispositif à entraînement rotatif est un perforateur rotatif (12), intégré transversalement par rapport au pas de la feuille (2) dans l'alimentation.

## Claims

1. System for cutting continuous covering sheets, of the type which continuously supplies a sheet (2) from a supply coil (3) for covering consecutive pieces (1), and wherein a mechanism (8) is arranged to act on the sheet (2) at the output of the supply reel thereof, to determine blocks (2.1) of said sheet (2) equivalent to the length of the pieces (1) which must be covered, said blocks (2.1) being guided to a posterior meeting point with the pieces (1), to individually cover each of the pieces, **characterised in that** the mechanism (8) is a device (10, 12) for rotationally driving members allowing the cutting and has a transverse arrangement which is fixed with respect to the path of the sheet, and **in that** said members of the device (10, 12) are rotationally driven in opposite directions.

2. Cutting system as claimed in Claim 1, **characterised in that** there is synchronisation between the movement of the sheet blocks (2.1) to the meeting point with the pieces (1) which must be covered, and the movement of the pieces, in order to determine, at the corresponding meeting point, the precise coincidence of each sheet block (2.1) with the respective piece (1) which must be covered.

3. Cutting system as claimed in Claim 1, **characterised in that** the rotational drive device is a rotational cutting device (10) integrated transversally with respect to the pitch of the sheet (2) in the supply.

4. Cutting system as claimed in Claim 1, **characterised in that** the rotational drive device is a rotary perforator (12) integrated transversally with respect to the pitch of the sheet (2) in the supply.

## Patentansprüche

1. Schnittsystem für Endlosabdeckfolien, in dem eine Folie (2) ausgehend von einer Zufuhrrolle (3) kontinuierlich zugeführt wird, um aufeinander folgende Stücke (1) abzudecken, und in dem ein Mechanismus (8) angeordnet ist, um am Ausgang der Zufuhrabspulung auf die Folie (2) einzuwirken, um Blöcke (2.1) der Folie (2) zu bestimmen, die der Länge der abzudeckenden Stücke (1) entsprechen, wobei die Blöcke (2.1) bis zu einem Punkt geführt werden, an dem sie später mit den Stücken (1 ) zusammentreffen, um jedes dieser Stücke einzeln abzudecken,
**dadurch gekennzeichnet, dass** der Mechanismus (8) eine Vorrichtung (10, 12) zum Rotationsantrieb von Mitteln, die den Schnittvorgang ermöglichen, ist und eine in Bezug auf den Verlauf der Folie transversale feststehende Anordnung aufweist, und dass die Mittel der Vorrichtung (10, 12) in entgegengesetzte Richtungen in Rotation gebracht werden.

2. Schnittsystem gemäß Anspruch 1, **dadurch gekennzeichnet, dass** zwischen der Verlagerung der Folienblöcke (2.1) bis zu dem Punkt des Zusammentreffens mit den abzudeckenden Stücken (1) und deren Verlagerung eine Synchronisierung durchgeführt wird, um am Punkt des entsprechenden Zusammentreffens die exakte Koinzidenz jedes Folienblockes (2.1) mit dem jeweiligen abzudeckenden Stück (1) zu bestimmen .

3. Schnittsystem gemäß Anspruch 1, **dadurch gekennzeichnet, dass** die Rotationsantriebsvorrichtung eine Rotationsschneidevorrichtung (10) ist, die transversal in Bezug auf den Lauf der Folie (2) bei der Zufuhr integriert ist.

4. Schnittsystem gemäß Anspruch 1, **dadurch gekennzeichnet, dass** die Rotationsantriebsvorrichtung eine Rotationsperforiervorrichtung (12) ist, die transversal in Bezug auf den Lauf der Folie (2) bei der Zufuhr integriert ist.
